# EUROPEAN PATENT APPLICATION

(11) **EP 2 528 043 A1**
(43) Date of publication of application: **28.11.2012**
(21) Application number: 11167075.8
(22) Date of filing: 23.05.2011
(51) Int. Cl.: G07C 5/00, G01F 15/06

(54) **Detection of fraud with refuelling a motorized vehicle**

(71) Applicant: NXP B.V., 5656 AG Eindhoven (NL)
(72) Inventor: Brandsma, Ewout, 5656 AG, Eindhoven (NL); Knubben, Wilhelmus Hubertus Chretien, 5656 AG, Eindhoven (NL)
(74) Representative: Krott, Michel

(57) **Abstract**

Fraudulent use is detected of fuel, intended for a specific car. The specific car has a fuel tank, a data processing system that generates system data, and a token. The system data relates to functional conditions in operational use of the car, e.g., fuel level in the tank, current fuel consumption, odometer reading, etc. The token stores an identifier associated with the specific car. The token receives the system data from the data processing system, and supplies token data to a server via a terminal at a fuel station at the current refueling. The token data comprises at least the identifier or the system data. From the terminal, the server also receives terminal data relating to an amount of fuel obtained from the fuel station, and an identity of the specific car as captured by a surveillance camera. The server processes the token data and the terminal data and issues an alert if the server notes a discrepancy.

## Description

### FIELD OF THE INVENTION

The invention relates to a method of detecting fraudulent use of fuel, intended for a power source of a specific motorized vehicle, to a specific motorized vehicle with an onboard data processing system for use in the method, to first control software on a computer-readable medium for configuring a data processing system onboard a motorized vehicle, to second control software on a computer-readable medium to configure a server for implementing the method, and to a system configured for detecting fraudulent use of fuel, intended for a power source of a specific motorized vehicle.

### BACKGROUND ART

Many car-lease companies issue fuel cards to enable drivers of the leased cars to refuel at fuel stations without the drivers having to intervene in the payments. Payment for the fuel is settled between the lease company and the fuel station. For example, the driver simply presents the fuel card to the cashier after refueling in order to settle the payment.

This procedure is susceptible to fraud. For example, a fraudulent driver may use such fuel card to pay for fuel supplied to a motorized vehicle, other than the motorized vehicle associated with the fuel card, e.g., a privately owned car. As another example, a fraudulent driver may fill up a jerry can with fuel, have the payment for the fuel settled using the fuel card and use the fuel in the jerry can for another vehicle than the vehicle associated with the fuel card. As still another example, the fraudulent driver may refuel the leased car, have the fuel paid for via the fuel card, and later on siphon off the fuel into a jerry can for selling the fuel or refueling a vehicle other than the vehicle associated with the fuel card.

Clearly, such fraud scenarios financially harm the lease company or another party that is eventually presented with the fuel bills (e.g., the employer of the vehicle driver).

As a means to deter such fraud, it is nowadays common practice for the driver to manually key-in the odometer reading of the authorized vehicle at the payment terminal at the cashier's desk. The lease company can then later on correlate the successive odometer readings with the amounts of fuel purchased at successive refuelings. The lease company may infer potential fraud from the correlation using certain assumptions about, e.g., the motorized vehicle's nominal fuel consumption, and may investigate further if needed.

### SUMMARY OF THE INVENTION

The known anti-fraud procedure of manually keying in the odometer reading at the cashier's desk has certain drawbacks.

A first drawback is that this manually keying-in of the odometer reading is not very user-friendly. For example, the vehicle's driver has to either memorize or write down the odometer reading on a piece of scrap paper before going over to the cashier's desk to complete the refueling transaction. As another example, the motorized vehicle is designed so that the odometer can only be read if the vehicle's power has been turned on, which means that the driver either has to remind him/herself of writing down the odometer reading before turning off the vehicle's power, or he/she has to enter the car again after refueling, put the ignition key into the lock, and turn on the power.

A second drawback is that the known anti-fraud procedure is error prone. For example, the vehicle's driver may unintentionally err when keying-in the odometer reading, e.g., because the vehicle's driver has a fragile short-time memory or has got distracted, or because the driver cannot readily decipher his/her own handwriting, or because the driver simply misread the odometer owing to, e.g., the glare of a light source such as the sun or a neon sign.

A third drawback is that the known anti-fraud procedure only provides a very coarse filter for detecting actual fraud. This coarseness stems from the fact that the estimations of the nominal fuel consumption are based only on the specific type of motorized vehicle driven and the distances traveled. Such estimations are inaccurate due to variations in type of road (e.g., highway or back road), in road conditions (e.g., congested or not, short distances between successive intersections with traffic lights), type of terrain traversed (flat terrain or mountain; open road or densely populated area); personal driving style (e.g., civilized or aggressive), mechanical condition of the motorized vehicle, condition of the tires (e.g., inflated to the proper pressure or well below the recommended pressure), the weather (e.g., wind, humidity, temperature, snow, ice, rain, fog, etc.), etc. Furthermore, intentional keying-in incorrect (too high) odometer readings can be covered-up by tampering with the car's odometer before it is checked by the lease company or another authority. Such extensive fraud causes even more damage to the lease company (higher perceived mileage on the car and therefore a lower value of the car at resale).

The inventors therefore propose a method of determining whether to authorize cashless payment, the method having fewer drawbacks than the ones discussed above. More specifically, the inventors propose a method of detecting fraudulent use of fuel, intended for a power source of a specific motorized vehicle. The specific motorized vehicle comprises onboard fuel storage for storing the fuel for being consumed by the power source in operational use of the motorized vehicle, and an onboard data processing system for generating system data. The system data comprises at least one of: first data representative of a respective first amount of fuel present in the onboard fuel storage at a respective time; second data representative of a respective second amount of fuel consumed by the power source during a respective time interval or over a respective distance traveled in operational use of the motorized vehicle; third data representative of a geographic location assumed by the motorized vehicle in operational use; and fourth data representative of a reading of an odometer of the specific motorized vehicle in operational use. The specific motorized vehicle also comprises a token. The token is configured for storing an identifier associated with the specific motorized vehicle; receiving the system data from the onboard data processing system; and supplying token data to a terminal. The token data is representative of at least one of the identifier and the system data. The method comprises at a current refueling of the specific motorized vehicle: receiving the token data from the token via the terminal; receiving terminal data from the terminal. The terminal data comprises at least one of fifth data representative of a fifth amount of fuel obtained from the fuel station; and sixth data representative of an identity of the specific motorized vehicle. The method comprises processing of the token data and the terminal data for determining whether or not there is a discrepancy; and issuing an alert if the discrepancy is present.

The onboard data processing system of the specific motorized vehicle communicates system data to the token. The token stores the system data as the above token data. If the token comprises an onboard data processing capability, the token may pre-processes the system data (e.g., the token encrypts the system data or the token filters the system data) in order to create the token data. When fuel is supplied at a fuel station to a motorized vehicle or to portable fuel storage, a terminal at the fuel station receives data representative of the amount of fuel supplied. The token is used to communicate the token data needed to complete the transaction at the fuel station, e.g., in order to have a cashless payment authorized by a remote party for the fuel currently supplied by the fuel station. The terminal may, optionally, receive data indicative of an identity of the motorized vehicle or of the type of portable fuel storage or of the person associated with the motorized vehicle or the portable fuel storage. The data indicative of the identity may be extracted, e.g., from pictures taken by a surveillance camera system at the fuel station, or from a signal from a transponder accommodated at the motorized vehicle. As to this transponder, some authorities have been pondering the idea of providing each car or truck, which has been registered within their jurisdiction, with a transponder to wirelessly track the car or truck. For example, tracking the car or truck in operational use enables to charge a road tax that depends on the actual usage, instead of a flat road tax independent of the actual usage. This approach is believed to reduce traffic congestion.

Correlating the token data and the terminal data as received enables to identify certain fraud scenarios. For example, assume that the correlating of the token data and the terminal data reveals that the amount of fuel supplied at the current refueling exceeds the total capacity of the fuel storage of the specific motorized vehicle associated with the token. The total capacity of the fuel storage is known in advance. Therefore, a discrepancy arises, as the amount of fuel supplied by the fuel station cannot have gone all into the fuel storage of the specific motorized vehicle if the listed total capacity of the fuel storage is correct. As another example, assume that the correlating of the token data and the terminal data reveals that the identity of the motorized vehicle that has been refueled does not correspond to the identity of the specific motorized vehicle associated with the token. Therefore, a discrepancy arises as the identity of the refueled motorized vehicle does not match the identity of the specific motorized vehicle associated with the token. If a discrepancy is detected, an alert may be issued, for example, in order to refuse authorization for the current cashless payment or in order to raise the issue of the discrepancy later on with the driver of the specific motorized vehicle.

The token may be a portable physical device that is present in the specific motorized vehicle in operational use of the specific motorized vehicle. The token may be removable from the specific motorized vehicle in order for the driver of the specific motorized vehicle to take the token to the terminal. For example, if the power source of the specific motorized vehicle has a gasoline engine, the token may be physically integrated with the key to lock and unlock the specific motorized vehicle and to turn on and turn off the ignition of the power source.

Alternatively, the token is physically integrated with the onboard data processing system of the specific motorized vehicle and is not configured for being removed by the driver. For example, the power source of the specific motorized vehicle comprises an electric motor that gets its power from a battery that serves as the fuel storage. Recharging the battery is done, e.g., via galvanic connection with a power cord between the battery and an electrical power outlet of the fuel station. The galvanic connection may comprise a separate wired connection for connecting the token to the terminal for receipt of the token data while the battery is being recharged. Alternatively, the token data is communicated to the terminal via the wires of the power cord. That is, the token data is carried on a conductor also used for the transmission of electric power. This mechanism is typically referred to as "power line communication" (PLC). Alternatively, the communication of the token data from the token to the terminal uses a short-range wireless technology such as a near-field communication (NFC) technology or a Bluetooth technology.

The identifier of the token associates the token with the specific motorized vehicle. The identifier is, for example, stored in a read-only memory. The onboard data processing system of the specific motorized vehicle communicates the system data to the token only if the identifier of the token has a correspondence with the identity of the specific motorized vehicle. For example, the identity of the specific motorized vehicle is stored in another read-only memory at the onboard data processing system, and the onboard data processing system verifies the correspondence before communicating the system data to the token. Alternatively, the onboard data processing system writes the identifier in the token each time the token is being connected to the onboard data processing system. The identifier may be a hash of the system data, which has been written to the token by the onboard data processing system before the token is used for communicating the token data to the terminal, and of the identity of the specific motorized vehicle. Additional security measures may be taken for enabling to verify that the token is indeed associated with the specific motorized vehicle.

In an embodiment of the method of the invention, the method comprises: under control of the identifier, storing in a database current refueling data representative of the token data and of the terminal data received at the current refueling; under control of the identifier, retrieving from the database previous refueling data representative of (processed or as received) the token data and of the terminal data received at a previous refueling (at the same fuel station or at another fuel station equipped with a similar terminal for data communication with the token); and processing the token data and the terminal data of the current refueling and the previous refueling data to determine whether or not the discrepancy is present.

In above embodiment of the method, a history of the token data and of the terminal data is taken into account in order to determine if the current token data and the current terminal data give rise to a discrepancy when interpreted in the light of the history of the token data and the terminal data.

For example, assume that the token data includes information about a reading of the odometer of the specific motorized vehicle and about the level of the fuel left in the fuel storage of the specific motorized vehicle each time when the power source of the specific motorized vehicle was being turned off and each time the power source of the specific motorized vehicle was being turned on. Assume that the driver has siphoned off some of the fuel present in the fuel storage of the specific motorized vehicle after the current refueling at the fuel station. The siphoning off is typically done with the power source turned off. Next time the specific motorized vehicle is being refueled and the token communicates the token data to the terminal, a drop in the level of fuel is identified between turning off the power source and the next turning on the power source. It is assumed that a conservation law of fuel applies: if the power source has been turned off, fuel should not disappear from the fuel storage as the power source does not consume fuel if turned off. A discrepancy arises if fuel has disappeared from the fuel storage while the power source has been turned off. Accordingly, an alert may be raised.

As another example, the token data and the terminal data, received and stored in the database at the preceding refueling, are correlated with the token data and the terminal data received at the current refueling, The preceding token data and the current token data may indicate a total distance traveled between the preceding refueling and the current refueling that is incompatible with the amount of fuel, which has disappeared from the fuel storage in the time interval between the preceding refueling and the current refueling.

The current refueling data is representative of the token data and the terminal data received at the current refueling. The current refueling data is stored in the database as is, or after having been converted by the processing in a more convenient format. For example, the current refueling data comprises also information about the discrepancy if detected, and about what data elements in the token data gave rise to the discrepancy. Accordingly, the processing of the token data received at future refuelings may be adjusted to concentrate on specifically those data elements in the token data that gave rise to the current discrepancy.

In a further embodiment of the method, the method comprises storing in the token at the current refueling at least one of the terminal data and discrepancy data representative of the discrepancy determined.

The onboard data processing system is configured to supply the system data to the token that is representative of at least one of the first data, the second data, the third data and the fourth data. If the terminal data and/or the discrepancy data are/is stored in the token at the current refueling, the token is enabled to communicate the terminal data and/or the discrepancy data to the onboard data processing system of the specific motorized vehicle. The discrepancy data and/or the terminal data can then be used to control the operation of the onboard data processing system, e.g., so as increase the resolution in time or in distance traveled of the relevant one(s) of the first data, the second data, the third data and the fourth data. This approach then enables to identify a likely fraud scenario more accurately.

In a further embodiment of the method, at least one of the token data and the system data is encrypted and/or includes a hash value. For example, the token itself encrypts the system data received from the onboard data processing system to generate the token data stored at the token, or the onboard data processing system encrypts the system data supplied to the token. The token creates the token data on the basis of the encrypted system data received from the onboard data processing system. Encrypting the token data stored at the token and/or the system data from the onboard data processing system adds a layer of security to the method. Similarly, a hash function is used to map the token data and/or the system data on a hash value. A change to the token data or to the system data causes the hash value to change. Providing the hash value for the token data or for the system data enables to verify the integrity of the token data or the integrity of the system data.

The invention also relates to a specific motorized vehicle, comprising a power source for propelling the motorized vehicle; onboard fuel storage for storing the fuel for being consumed by the power source in operational use of the motorized vehicle and an onboard data processing system for generating system data. The system data comprises at least one of: first data representative of a respective first amount of fuel present in the onboard fuel storage at a respective time; second data representative of a respective second amount of fuel consumed by the power source during a respective time interval or over a respective distance traveled in operational use of the motorized vehicle; third data representative of a geographic location assumed by the motorized vehicle in operational use; and fourth data representative of a reading of an odometer of the specific motorized vehicle in operational use. The specific motorized vehicle also comprises a token configured for storing an identifier associated with the specific motorized vehicle. The onboard data processing system is configured for supplying the system data to the token if the identifier corresponds with an identity of the specific motorized vehicle. The token is configured for supplying token data to a terminal. The token data is representative of at least one of the identifier and the system data.

The invention also relates to first control software on a computer-readable medium for use with an onboard data processing system of a specific motorized vehicle. The computer-readable medium comprises, e.g., a solid-state memory, a magnetic disk, an optical disk, etc. The specific motorized vehicle comprises a power source for propelling the motorized vehicle; and onboard fuel storage for storing the fuel for being consumed by the power source in operational use of the motorized vehicle. The onboard data processing system is configured for generating system data that comprises at least one of: first data representative of a respective first amount of fuel present in the onboard fuel storage at a respective time; second data representative of a respective second amount of fuel consumed by the power source during a respective time interval or over a respective distance traveled in operational use of the motorized vehicle; third data representative of a geographic location assumed by the motorized vehicle in operational use; and fourth data representative of a reading of an odometer of the specific motorized vehicle in operational use. The first control software comprises first instructions to configure the onboard data processing system for supplying the system data to a token if the token has an identifier that corresponds with an identity of the specific motorized vehicle.

Modem motorized vehicles, such as cars and trucks, have been equipped with an onboard data processing system off factory. The onboard data processing system is operative, e.g., to manage the power source of the motorized vehicle, to implement a navigational aid, and to generate data relevant to the functional condition of the motorized vehicle. The data is provided in a human perceptible format in the user interface of the motorized vehicle or controls the visual information in the display functions of the user interface. Typically, the user interface of a motorized vehicle comprises, e.g., a fuel gauge showing the current level of fuel in the fuel storage in operational use of the motorized vehicle, an indicator that indicates the current fuel consumption in operational use of the motorized vehicle, a display with a roadmap for assisting the driver with navigating towards his/her destination, and an odometer that registers the distance traveled by the motorized vehicle. Accordingly, the above system data is readily available from the onboard data processing system. The system data may conventionally also be accumulated in a memory module at the onboard data processing system for diagnostic purposes regarding the functional condition of the motorized vehicle. The first control software enables to communicate the system data, which is conventionally used for control of the user interface or for being accumulated for diagnostic purposes, to the token if the token has an identifier associated with the specific motorized vehicle.

The invention also relates to second control software on a computer-readable medium for configuring a server connected to a terminal at a fuel station. The second control software implements at the server a method of detecting fraudulent use of fuel, intended for a power source of a specific motorized vehicle. The specific motorized vehicle comprises: onboard fuel storage for storing the fuel for being consumed by the power source in operational use of the motorized vehicle; an onboard data processing system for generating system data. The system data comprises at least one of: first data representative of a respective first amount of fuel present in the onboard fuel storage at a respective time; second data representative of a respective second amount of fuel consumed by the power source during a respective time interval or over a respective distance traveled in operational use of the motorized vehicle; third data representative of a geographic location assumed by the motorized vehicle in operational use; and fourth data representative of a reading of an odometer of the specific motorized vehicle in operational use. The specific motorized vehicle also comprises a token. The token is configured for: storing an identifier associated with the specific motorized vehicle; receiving the system data from the onboard data processing system; and supplying token data to the terminal. The token data is representative of at least one of the identifier and the system data. The second control software comprises: second instructions for receiving the token data from the token via the terminal at a current refueling of the specific motorized vehicle; and third instructions for receiving terminal data from the terminal at a current refueling of the specific motorized vehicle. The terminal data comprises at least one of: fifth data representative of a fifth amount of fuel obtained from the fuel station; and sixth data representative of an identity of the specific motorized vehicle. The second control software further comprises fourth instructions for processing of the token data and the terminal data for determining whether or not there is a discrepancy; and fifth instructions for issuing an alert if the discrepancy is present.

An embodiment of the second control software comprises: sixth instructions for storing, under control of the identifier, in a database current refueling data representative of the token data and the terminal data received at the current refueling; seventh instructions for retrieving, under control of the identifier, from the database previous refueling data representative of the token data and the terminal data received at a previous refueling; and eighth instructions for processing the token data and the terminal data of the current refueling and the previous refueling data to determine whether or not the discrepancy is present.

A further embodiment of the second control software comprises ninth instructions for storing in the token at the current refueling at least one of the terminal data and discrepancy data representative of the discrepancy determined.

In a further embodiment of the second control software, at least one of the token data and the system data is encrypted or includes a hash value.

The invention also relates to a system configured for detecting fraudulent use of fuel, intended for a power source of a specific motorized vehicle. The system comprises a fuel supply for supplying the fuel; a terminal connected to the fuel supply; and a server connected to the terminal. The specific motorized vehicle comprises onboard fuel storage for storing the fuel for being consumed by the power source in operational use of the motorized vehicle; and an onboard data processing system for generating system data. The system data comprises at least one of: first data representative of a respective first amount of fuel present in the onboard fuel storage at a respective time; second data representative of a respective second amount of fuel consumed by the power source during a respective time interval or over a respective distance traveled in operational use of the motorized vehicle; third data representative of a geographic location assumed by the motorized vehicle in operational use; and fourth data representative of a reading of an odometer of the specific motorized vehicle in operational use. The specific motorized vehicle also comprises a token configured for storing an identifier associated with the specific motorized vehicle; receiving the system data from the onboard data processing system; and supplying token data to the terminal. The token data is representative of at least one of the identifier and the system data. The terminal is operative, at a current refueling of the specific motorized vehicle, to receive the token data from the token and to generate terminal data that comprises at least one of: fifth data representative of a fifth amount of fuel obtained from the fuel station; and sixth data representative of an identity of the specific motorized vehicle. The server is configured for: receiving from the terminal the token data and the terminal data; processing of the token data and the terminal data for determining whether or not there is a discrepancy; and issuing an alert if the discrepancy is present.

An embodiment of the system comprises a database connected to the server. The server is operative to store, under control of the identifier, in the database current refueling data representative of the token data and the terminal data received at the current refueling. The server is operative to retrieve, under control of the identifier, from the database previous refueling data representative of the token data and the terminal data received at a previous refueling. The server is operative to process the token data and the terminal data of the current refueling and the previous refueling data to determine whether or not the discrepancy is present.

In a further embodiment of the system, the system is configured for storing via the terminal in the token at the current refueling at least one of the terminal data and discrepancy data representative of the discrepancy determined.

### BRIEF DESCRIPTION OF THE DRAWING

The invention is explained in further detail, by way of example and with reference to the accompanying drawing, wherein:
Fig.1 is a block diagram of a motorized vehicle in the invention;
Fig.2 is a diagram illustrating points of attack that can be used in fraud scenarios;
Fig.3 is a block diagram of a system according to the invention; and
Fig.4 is a process diagram illustrating an example of a method according to the invention

Throughout the Figures, similar or corresponding features are indicated by same reference numerals.

### DETAILED EMBODIMENTS

The invention relates to the detecting of fraudulent use of fuel that is intended for, e.g., a specific car. The specific car has a fuel tank, an onboard data processing system that generates system data, and a token. The system data relates to functional conditions in operational use of the car, e.g., fuel level in the tank, current fuel consumption, odometer reading, etc. The token stores an identifier associated with the specific car. The token receives the system data from the data processing system, and supplies token data to a server via a terminal at a fuel station at the current refueling. The token data comprises at least the identifier or the system data. From the terminal, the server also receives terminal data relating to an amount of fuel obtained from the fuel station, and an identity of the specific car as captured by a surveillance camera. The server processes the token data and the terminal data and issues an alert if the server notes a discrepancy.

### SPECIFIC MOTORIZED VEHICLE

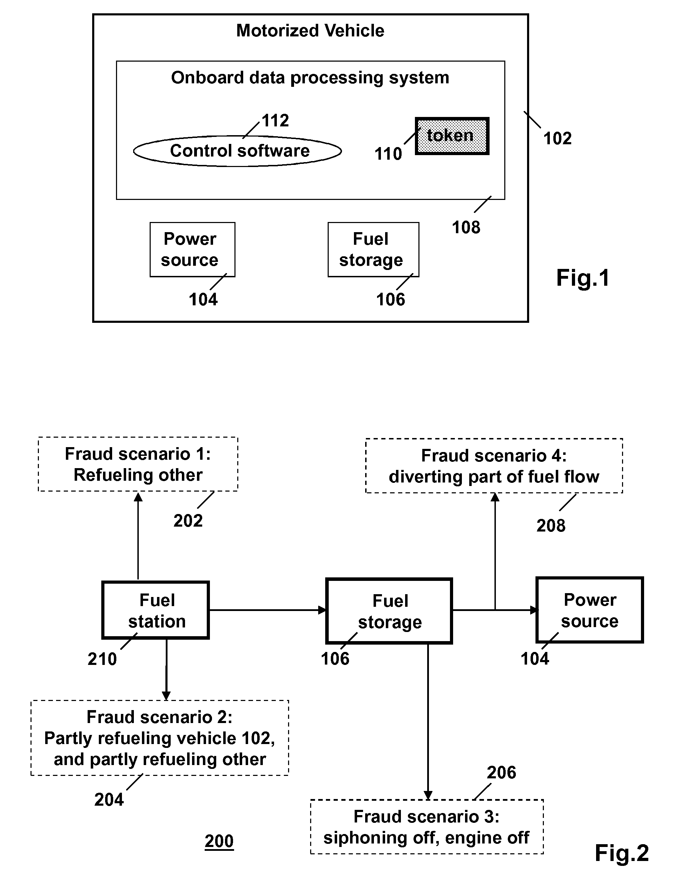

Fig.1 is a diagram of a specific motorized vehicle 102. The specific motorized vehicle 102 is, e.g., an automobile, such as a passenger car, a van or a truck, or a motorboat, a motorcycle, an airplane, etc. The specific motorized vehicle 102 is powered by an onboard power source 104 for propelling the specific motorized vehicle 102. In order to do so, the power source 104 converts chemical energy or electrical energy into mechanical energy. Within this context, the expression "chemical energy" refers to the potential of, e.g., gasoline or diesel, to undergo a transformation through a chemical reaction with oxygen, thereby releasing energy in the form of heat of combustion.

The onboard power source 104 comprises, e.g., an engine that converts chemical energy, generated by means of burning a fuel, into mechanical energy. Examples of such an engine are an internal combustion engine, such as a petrol (gasoline) engine, a diesel engine or an engine designed to run on the combustion of pure hydrogen or of propane, an external combustion engine such as a Stirling engine or a steam engine. The substance to be combusted or burned is stored onboard the specific motorized vehicle 102 in a suitable tank or container. Alternatively, or in addition, the power source 104 comprises an electric motor that is powered from electrical charge storage onboard the specific motorized vehicle 102. The electric charge storage comprises, e.g., a voltaic battery or a capacitor.

The term "fuel" is used throughout this text to refer to the substance that is meant for being burned in an internal combustion engine or in an external combustion engine, as well as to the electric charge available from the battery or the capacitor for powering the electric motor.

The fuel for powering the onboard power source 104 in operational use of the specific motorized vehicle 102 is stored in fuel storage 106 onboard the onboard the vehicle 102. In case the specific motorized vehicle 102 being an automobile with an internal combustion engine as the power source 104, the fuel storage 106 comprises a tank for holding gasoline, diesel, hydrogen, or propane. In case the specific motorized vehicle 102 has an electric motor in the power source 104, the fuel storage 106 comprises one or more voltaic batteries, one or more capacitors or super-capacitors, etc.

The fuel storage 106 has a limited storage capacity. Accordingly, the fuel needs to be replenished when the fuel level has dropped as a result of its having being consumed by the power source 104 in order to generate mechanical energy for propelling the specific motorized vehicle 102. That is, the specific motorized vehicle 102 has to be refueled so as to increase the fuel level. In order to refuel the specific motorized vehicle 102, the driver drives the specific motorized vehicle 102 to a fuel station (not shown here), e.g., a petrol station, refuels the specific motorized vehicle 102 at the fuel station so as to increase the fuel level of the fuel storage 106, and initiates a financial transaction at a terminal or at a desk at the fuel station to pay for the amount of fuel acquired from the fuel station. Methods for making a payment at the fuel station include paying in cash, writing a personal check to be drawn on the driver's bank, paying by credit card, debit card, or bank card, or by using a fuel card. A fuel card is a dedicated card, issued by, e.g., the company from which the specific motorized vehicle 102 has been leased or an employer of the driver of the specific motorized vehicle 102. A fuel card is configured for enabling the driver to make cashless payments at fuel stations, without any participation of the driver's financial resources.

Consider the case, wherein the driver of the specific motorized vehicle 102 uses a fuel card in order to initiate a cashless financial transaction between the fuel station and the party that has issued the fuel card in order to pay the fuel station for the amount of fuel acquired. The financial transaction and the associated keeping of administrative records then only involve the fuel station and the party that issued the fuel card to the driver, e.g., the driver's employer or the lease company from which the driver has leased the specific motorized vehicle 102. As discussed, the known use of a fuel card is prone to unintentional errors, but also susceptible to fraud committed by an unscrupulous driver.

### POINTS OF ATTACK IN FRAUD SCENARIOS

Fig.2 is a diagram 200 illustrating points of attack in a first fraud scenario 202, a second fraud scenario 204, a third fraud scenario 206 and a fourth fraud scenario 208, addressed earlier above.

In the first fraud scenario 202, a motorized vehicle, other than the specific motorized vehicle 102, is refueled at a fuel station 210, or the fuel is supplied at the fuel station 210 to fuel storage other than that of the specific motorized vehicle 102, e.g., a jerry can for holding gasoline.

In the second fraud scenario 204, the fuel obtained from the fuel station 210 is partly supplied at the fuel station 210 to the specific motorized vehicle 102 and partly to another motorized vehicle or to the other fuel storage, e.g., a jerry can for holding gasoline.

In the third fraud scenario 206, fuel is siphoned off the fuel storage 106 of the specific motorized vehicle 102 after the refueling at the fuel station 210 and when the power source 104 of the specific motorized vehicle 102 has been turned off.

In the fourth fraud scenario 208, the fuel flow from the fuel storage 106 to the power source 104 in operational use of the specific motorized vehicle 102 is tapped, and part of the fuel is diverted to an ancillary fuel storage onboard the specific motorized vehicle 102 and does not reach the power source 104 of the specific motorized vehicle 102. For example, the fuel pipe in a car with a gasoline engine is tapped between the tank and the fuel injection system so as to divert part of the gasoline to a jerry can stowed away in the trunk of the car.

The inventors propose a way of intercepting the first fraud scenario 202, the second fraud scenario 204, the third fraud scenario 206 and the fourth fraud scenario 208.

Reference is now made to the diagram of Fig. 1 again. The motorized vehicle 102 comprises an onboard data processing system 108. As known, the onboard electronic systems of mass-market automobiles, vans, trucks, and motorcycles manufactured over the past three decades have grown increasingly more sophisticated with each new model year. Nowadays, a typical specimen of such a motorized vehicle 102 has an onboard data processing system that is configured for monitoring and actively controlling the operation of the engine, the gearbox, the suspension, the steering, the brakes, the climate-control system, etc., for controlling the display of information at the dashboard or at the instrument panel of the motorized vehicle 102, for storing in a memory data representative of the mechanical condition or electrical condition of the motorized vehicle 102 as determined over a period of time, for control of onboard infotainment equipment such as a navigation aid, an MP3 player, a DVD player, a TV, a telephone, etc. Unverified rumors even have it that sophisticated specimens of cars have been proposed that automatically analyze the pheromones excreted by the person in the driver's seat before deciding whether or not to render the car inoperative in response to detecting that the person is not in the mood for driving on the public road. Also note that a motorized vehicle for commercial use within a certain jurisdiction, such as a long-haul truck and a touring car or bus, is mandatorily equipped with either a digital tachograph or an analog tachograph. As known, a tachograph is a device that records the road speed of the motorized vehicle over time.

It is assumed here that the onboard data processing system 108 of the specific motorized vehicle 102 has been configured for generating at least one of the following data: first data that is indicative of the respective amounts of fuel present in the fuel storage 106 at respective times; second data that is representative of the fuel consumption of the power source 104 of the specific motorized vehicle 102 in operational use during at least a particular time interval; third data that is representative of respective geographic locations of the motorized vehicle 102 at respective moments in operational use of the motorized vehicle 102, and fourth data representative of one or more readings of an odometer of the motorized vehicle 102. Preferably, the first data, the second data, the third data and the fourth data are time-stamped when generated. If the onboard data processing system 108 is a general-purpose data processing system, the onboard data processing system 108 may have been configured to generate the first data, the second data, the third data and/or the fourth data by means of installing first control software 112.

The first data represents a history log of the fuel level of the fuel in the fuel storage 106. For example, the fuel level is logged each time the power source 104 of the specific motorized vehicle 102 is being turned on and each the power source 104 of the specific motorized vehicle 102 is being turned off. Alternatively, or in addition, the fuel level is logged, for example, periodically or at randomly chosen moments. Alternatively, or in addition, the fuel level is logged, for example, under control of an odometer (not shown) of the specific motorized vehicle 102 each time the specific motorized vehicle 102 has traveled a distance of a particular length or of randomly chosen length. Alternatively, or in addition, the fuel level is logged, for example, under control of the magnitude of the fuel consumption in operational use of the specific motorized vehicle 102. When the fuel consumption is high, logging the fuel level more frequently than when the fuel consumption is low provides a more accurate picture of the fuel consumption owing to the higher resolution of the data gathered. Context data may be logged as well in order to provide a context of the change in fuel level in operational use of the specific motorized vehicle 102. The change in fuel level is assumed to represent the amount of fuel transferred from the fuel storage 106 to the power source 104, and thus is assumed to be indicative of the fuel consumption. For example, if the specific motorized vehicle has a gasoline engine, fuel consumption is higher at higher road speeds than at lower road speeds, fuel consumption is higher when driving uphill than when coasting downhill, fuel consumption is typically higher with the airco turned on than with the airco turned off, fuel consumption is higher with an aggressive driving style than with a more relaxed and defensive driving style, fuel consumption is typically higher for a car with a gasoline engine in start-stop traffic, typical of congested cities, than on the highway, etc. The onboard data processing system 108 may provide the context data by means of logging road speed, acceleration, deceleration, the times when ancillary devices such as airco or onboard TV have been turned on, the route taken as determined via a GPS (Global Positioning System) navigation system (not shown) integrated in the onboard data processing system 108, etc. Time-stamping the fuel levels as logged and time-stamping the context data as logged enable to correlate the logged fuel levels and the context data.

The second data represents a history log of the fuel consumption. For example, the power source is a gasoline engine with a fuel-injection system .The fuel consumption is measured at the fuel-injection system, e.g., by means of monitoring the amounts of gasoline injected into the gasoline engine per time interval. Typically, modem gasoline cars have an engine control unit (ECU) that determines the amount of fuel to be injected, the ignition timing and other parameters in order to control the running of the engine. Again, above context data may be logged and time-stamped to be able to properly interpret the fuel consumption as measured with reference to the context data.

The third data is indicative of respective geographic locations of the motorized vehicle 102 at respective moments in operational use of the motorized vehicle 102. Many modem cars have a navigation system based on, e.g., GPS, and merged into the data processing system 108 off factory. For example, the level of the fuel in the fuel storage 106 is logged when the power source 104 is turned off and the level of the fuel in the storage 106 is logged when the power source 104 is turned on. If there is a significant increase between the level of fuel, logged when the power source 104 is being turned off, and the level of fuel that is logged when the power source 104 is being turned on, it may be concluded that fuel has been added to the fuel storage 106, typically at a fuel station, e.g., the fuel station 210. By means of logging the geographic location determined for the position of the specific motorized vehicle 102 at the time of the increase in the level of fuel in the fuel storage 104, the geographic location as logged may be used to determine the geographic location of the fuel station. Also, the geographic location of the motorized vehicle 102 can be associated with the condition of the road along which the specific motorized vehicle 102 is traveling. Time-stamping the third data enables to associate the geographic location to, e.g., weather conditions local to the geographic location, condition of the traffic near the geographic location (e.g., heavily congested, traffic jam owing to accident, etc.) and so on.

As mentioned earlier, the fourth data is representative of one or more readings of an odometer of the motorized vehicle 102. As mentioned earlier, an odometer is an instrument of the motorized vehicle 102 that registers the distance traveled by the motorized vehicle 102.

The onboard data processing system of a typical motorized vehicle either has already above capabilities or can be upgraded e.g., by means of installing additional control software and/or control hardware to provide the capability to generate at least one of the first data, the second data, the third data and the fourth data. Control software 112 is provided to be installed at the data processing system 108, or is installed at the data processing system 108, on a computer-readable medium, such as a solid-state memory, an optical disc or a hard disk drive.

The data processing system 108 of the specific motorized vehicle 102 is configured for storing into a memory (not shown), accommodated at a token 110, at least one of the first data, the second data, the third data and the fourth data. Optionally, the data processing system 108 is also configured for storing the context data into the token 110.

In operational use of the motorized vehicle 102, the token 110 remains in, or at, the motorized vehicle 102. The first data and/or the second data and/or the third data and/or the fourth data are/is kept in, or transferred to, the memory of the token 110. Optionally, the context data is kept in, or is transferred to, the memory of the token 110. The relevant one(s) of this data is (are) transferred to the memory of the token 110 so as to be accumulated at the token on an ongoing basis in operational use of the specific motorized vehicle 102, or the relevant one(-s) of the data is (are) transferred to the memory of the token 110 in a batch when the power source 104 of the specific motorized vehicle 102 is being turning off. For example, the onboard data processing system 108 transfers the relevant data to the token 110 when the driver of the specific motorized vehicle 102 turns off the power source 104 in order to immobilizes the specific motorized vehicle 102. Alternatively, the onboard data processing system 108 transmits updates of the data to the token 110 on a frequent basis and sends a validation of the most recent updates to the token 110 when the driver of the specific motorized vehicle 102 turns off the power source 104.

The memory of the token 110 comprises a non-volatile memory, e.g., a non-volatile solid-state memory such as a flash-memory, or a magnetic memory such as a hard disk drive, etc. The token 110 has an interface for data communication with the data processing system 108 when in, or at, the specific motorized vehicle 102. The interface comprises, for example, a galvanic interface such as a USB-connector (USB: Universal Serial Bus), or a wireless interface. Examples of a wireless interface are: an interface configured for an RF (radio frequency) protocol based on, e.g., the Wi-Fi /IEEE 802.11 standard or a proprietary protocol, an NFC (Near Field Communication) interface, or an interface configured for an IR (infrared) protocol such as IrDA. The token 110 is configured for being removed from the motorized vehicle 102, and for being installed again in, or at, the specific motorized vehicle 102 for communication with the data processing system 108 in operational use of the specific motorized vehicle 102.

The token 110 is comprised, for example, in a physical key issued to the driver for rendering the specific motorized vehicle 102 operational, e.g., a car-key or ignition key. As another example, the token 110 is accommodated in another physical device, such as a mobile telephone or a personal digital assistant (PDA) of the driver. Within this context, reference is made to a concept car created by NXP and Continental and shown at the Mobile World Congress (MWC), Barcelona, Feb.14-17, 2011. An NFC technology is used to unlock the car through an authentication process in an interaction between the secure elements of a mobile telephone of an authorized person and the car. Once unlocked, the car then automatically adjusts the driver's seat and the rearview mirrors according to pre-determined personal preferences of the authorized person. The NFC technology is also used to communicate the coordinates of the geographic location of the car to the mobile telephone when the engine is being turned off, e.g., in a car park, so that the authorized person will be able to easily locate the car later on via his/her GPS-enabled mobile telephone. From an ergonomic point of view it is preferable that the driver has already been conditioned to automatically take the physical device, such as the car-key or his/her mobile telephone with him/her when leaving the specific motorized vehicle 102. Alternatively, the token 110 is configured for initiating a cashless transaction. For example, the token 110 comprises a smart-card implemented as the fuel card mentioned earlier. Optionally, the token 110 also stores an identifier that enables to identify the token 110 as associated with the specific motorized vehicle 102. For example, the identifier is stored in a read-only memory accommodated at the token 110 and is secured against tampering.

### SYSTEM

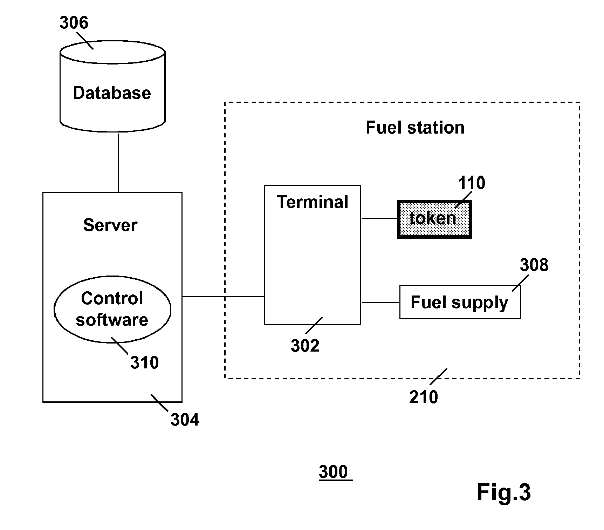

Fig.3 is a diagram of a system 300 according to the invention. The system 300 is configured for detecting fraudulent use of fuel intended for the specific motorized vehicle 102. The system 300 comprises a terminal 302 at the fuel station 210, a server 304 and a database 306. The terminal 302 is configured for receiving fifth data from a fuel supply 308 at the fuel station 210, the fifth data being representative of the amount of fuel obtained from the fuel supply 308. The fuel supply 308 comprises, e.g., a fuel dispenser for supply of gasoline, diesel, LPG (Liquefied Petroleum Gas, also referred to as propane), hydrogen, etc., or a power outlet of the electricity network, etc. For example, the fuel supply 308 at the fuel station 210 is a pump for supplying a liquid fuel, e.g., gasoline, to the fuel tank of a motor car. The fifth data received at the terminal 302 from the pump 308 is indicative of the volume of liquid fuel supplied by the pump 308 in terms of liters or gallons.

The system 300 involves a number of functional entities that may be geographically or spatially distributed, or may be concentrated at a single geographic location. For example, the terminal 302 may be located at one location, and is connected via the Internet to the server 304 at a remote location. The database 306 may, in turn, be located at another remote location and may be connected to the server 304 via the Internet.

Consider that the driver of the specific motorized vehicle 102 has removed the token 110 from the motorized vehicle 102 and has taken the token 110 to the terminal 302 of the fuel station 210. The token 110 communicates to the terminal 302 the data that is stored at the token, i.e., the first data and/or the second data and/or the third data and/or the fourth data and, optionally, the context data mentioned above. The data communication between the token 110 and the terminal 302 may use the galvanic interface and/or the wireless interface of the token 110, or an alternative interface, as mentioned earlier.

Optionally, the token also communicates to the terminal 302 the identifier of the token 110 that associates the token 110 with the specific motorized vehicle 102. Alternatively, the terminal 302 obtains the identity of the specific motorized vehicle 102 via one or more surveillance cameras typically present on the premises of the fuel station 210. Typical gas stations are nowadays equipped with surveillance cameras for monitoring the vehicles being refueled at the gas station and for identifying a vehicle on the basis of the vehicle's registration plates, which are supposed to be permanently attached to the vehicle for official identification purposes.

The terminal 302 also receives the fifth data representative of the amount of fuel obtained from, or requested to be delivered from, the fuel supply 308. The terminal 302 receives the fifth data from the fuel supply 308 preferably via a wired connection in case the fuel supply 308 comprises a fuel dispenser for the supply of a combustible fluid, in order to minimize the hazard of a spark-induced explosion. Some gas stations even forbid the use of a mobile phone while the driver is refueling his/her car.

The terminal 302 thus obtains the first data and/or the second data and/or the third data and/or the fourth data received from the token 110, the fifth data received from the fuel supply 308, and the identity of the specific motorized vehicle 102 received from the token 110 and/or from the surveillance cameras at the fuel station 202. Optionally, the terminal 302 receives from the token 110 the context data specified earlier. The terminal 302 forwards the data received from the token 110, the fifth data received from the fuel supply 308 and the identity of the specific motorized vehicle 102 to the server 304. The server 304 may be on the premises of the fuel station 210 or may be at a remote location. For example, the server 304 is located at the party that is charged with the costs of the refueling, e.g., the driver's employer or the car lease company.

The server 304 receives the first data and/or the second data and/or the third data, and/or the fourth data, the fifth data and the identity of the specific motorized vehicle 102 from the terminal 302 and stores the first data and/or the second data and/or the third data and/or the fourth data and the fifth data in the database 306 as associated with the identity of the specific motorized vehicle 102. Optionally, the server 304 also receives the context data, discussed above, from the terminal 302 and subsequently stores the context data in the database 306. If the server 304 is a general-purpose server, the general-purpose server may be configured for implementing a method according to the invention by means of installing second control software 310.

It is assumed that the communication between the token 110 and the terminal 302 is a prerequisite for completing the financial transaction in order to pay for the fuel obtained from the fuel supply 308.

### FIRST SCENARIO 202

Consider now the first fraud scenario 202, wherein a motorized vehicle, other than the specific motorized vehicle 102, is refueled at the fuel station 210, or wherein the fuel is supplied from the fuel supply 308 to fuel storage other than that of the specific motorized vehicle 102, e.g., a jerry can for holding gasoline. The token 110, associated with the specific motorized vehicle 102, is involved in completing the financial transaction in order to pay for the fuel obtained from the fuel supply 308. This first fraud scenario 202 can be detected as follows.

The server 304 determines the identity of the specific motorized vehicle 102 via the identifier of the token 110. If the images captured by the surveillance cameras indicate that the identity of the refueled motorized vehicle differs from the identity of the specific motorized vehicle 102, the server 304 determines that there is a discrepancy that gives rise to an anomaly, whereupon the server 304 issues an alert to, e.g., the attendant of the fuel station 210, or to a party, other than the driver and authorizing a payment for the fuel obtained at the fuel station 210 via a cashless transaction, or to the driver him/herself. Alternatively, or in addition, data representative of the alert is stored in the database 306 as associated with the token 110 and, therefore, with the identity of the specific motorized vehicle 102, for use later on when the driver of the motorized vehicle 102 has to justify this first scenario to the parties of interest.

Alternatively, or in addition, the server 304 has received the identity of the specific motorized vehicle 102 via the token 110, the fifth data indicative of the amount of fuel supplied by the fuel supply 308 of the fuel station 210, and the first data representative of the respective amounts of fuel left in the fuel storage 106 at respective moments and received from the token 110. If the amount of fuel currently obtained from the fuel supply 308 exceeds a difference between, on the one hand, the official fuel capacity of the fuel storage 106 of the specific motorized vehicle 102 that is known in advance and, on the other hand, the amount of fuel left in the fuel storage of the specific motorized vehicle 102 according to the token 110 at the time of the current refueling, the server 304 determines that there is a discrepancy between the amount of fuel obtained and the amount of fuel that could have gone into the fuel storage 106. This is an anomaly on the basis of which the server 304 issues an alert.

Alternatively, or in addition, the server 304 has received the identity of the specific motorized vehicle 102 via the token 110, the fifth data indicative of the amount of fuel supplied by the fuel supply 308, and the first data representative of the respective amounts of fuel left in the fuel storage 106 at respective moments. The server 304 stores the first data and the fifth data in the database 306 as associated with the identifier of the token 110 and, therefore, as associated with the identity of the specific motorized vehicle 102. The first data received includes information about the amount of fuel, most recently determined as left in the fuel storage 106 of the motorized vehicle 102, e.g., the amount determined at the moment when the driver was turning off the power source 104. Consider now a next refueling, now of the specific motorized vehicle 102 at the fuel station 210, or at a similarly equipped fuel station (not shown) different from the fuel station 210 of the preceding refueling of the other motorized vehicle or of the filling of the other fuel storage. For clarity, it is assumed that the next refueling is taking place at the fuel station 210.

The server 304 receives from the token 110 the first data, among which the fuel level in the fuel storage 106 determined when the driver was turning off the power source 104 at the beginning of this next refueling. According to the data stored in the database 306, the amount of fuel in the fuel storage 106 at the time of completing the preceding refueling (of the other motorized vehicle or of the other fuel storage) should have been the total of the amount of fuel in the fuel storage 106 at the start of the preceding refueling, i.e., at the turning off of the power source 104 at the fuel station 210, plus the amount obtained from the fuel station 210 at the preceding refueling. However, as the first data is time-stamped, the server 304 detects a discrepancy between, on the one hand, the amount of fuel in the fuel storage 106 of the specific motorized vehicle 102 as calculated at the time of the completion of the preceding refueling and, on the other hand, the amount of fuel in the fuel storage 106 of the specific motorized vehicle 102 when the motorized vehicle 102 is leaving the fuel station 210, as determined from the first data received from the token 110 at the current refueling. This discrepancy gives rise to an anomaly whereupon the server 304 issues an alert.

Alternatively, or in addition, the server 304 receives from the token 110, at the current refueling, the fourth data that is representative of one or more readings of the odometer of the specific motorized vehicle 102. The odometer readings are taken, e.g., each time the power source 104 of the specific motorized vehicle 102 is turned on and each time the power source 104 of the specific motorized vehicle 102 is turned off and/or at predetermined moments and/or at randomly chosen moments in operational use of the specific motorized vehicle 102. Now, consider a next refueling of the specific motorized vehicle 102. The database 306 has already stored the odometer reading of the specific motorized vehicle 102, obtained from the token 110 when the financial transaction of the preceding refueling was completed, i.e., the transaction that involved the refueling of the other motorized vehicle or the filling of the additional fuel storage. The server 304 will determine at the time of the next refueling the difference between the odometer reading received from the token 110 at the next refueling, and the odometer reading received from the token 110 at the time of the refueling of the other motorized vehicle or at the time of filling the additional fuel storage. The server 304 also has received the fifth data from the terminal 302 that is indicative of the amount of fuel obtained from the fuel supply 308 at the current refueling. The server 304 will then estimate the fuel consumption (mileage) of the specific motorized vehicle 102 based on the above odometer readings and an estimate of the amount of fuel consumed in the time span between the above odometer readings. The estimated amount of fuel consumed may be based on a difference between the amount of fuel obtained at the current refueling and the next refueling. If this estimated amount of fuel consumed between the above odometer readings is excessively high relative to the typical fuel consumption of the motorized vehicle 102, the server 304 identifies a discrepancy that gives rise to an anomaly, and issues an alert.

Alternatively, or in addition, the server 304 receives from the token 110 the first data, indicative of respective amounts of fuel present in the fuel storage 106 of the specific motorized vehicle 102 at respective times, and the fourth data that is indicative of one or more readings of the odometer of the specific motorized vehicle 102. The server 304 may identify, at the next refueling of the specific motorized vehicle 102, a discrepancy in the level of fuel present in the fuel storage 106 at certain odometer readings. The discrepancy will arise as a result of the amount of fuel obtained from the fuel supply 308 at the current refueling not being accounted for as there is no increase of the fuel level in the fuel storage 106 at the odometer reading associated with the current refueling.

Alternatively, or in addition, the server 304 receives from the token 110 the third data that is indicative of the geographic positions of the specific motorized vehicle 102 at certain times. If there is a discrepancy between the geographic location of the specific motorized vehicle 102 at the time of the refueling and the geographic location of the fuel station 210, the server 304 concludes that there is an anomaly and issues an alert.

Alternatively, or in addition, the server 304 receives from the token 110 the second data. The second data is representative of the amount of fuel consumed by the power source 104. The fuel consumption is determined by means of monitoring the flow of fuel into the power source 104, e.g., per unit of time or per unit of distance traveled, and integrating the fuel consumption thus determined over the time between turning on the power source 104 and turning off the power source 104, or over the distance traveled as derived from the odometer reading at turning on the power source 104 and the odometer reading at turning off the power source 104. The server 302 accumulates the second data in the database 306, thus creating a history log of the fuel consumption that is extended with every refueling operation of the motorized vehicle 102. At each respective refueling of the motorized vehicle 102, the server 304 also receives from the terminal 302 the respective fifth data that is representative of the respective amount of fuel obtained from the fuel supply 308. Accordingly, the database 306 stores information about the amounts of fuel supplied to the motorized vehicle 102 over the service life of the motorized vehicle 102 so far, as well as information about the amounts of fuel consumed by the power source 104 between each pair of successive refuelings during the service life of the motorized vehicle 102. Consider a series of two or more successive refuelings of the motorized vehicle 102. Consider a difference between the amount of fuel supplied at a specific refueling and the amount of fuel consumed between the specific refueling and the subsequent refueling. In the absence of fraud and in the absence of a leak in the fuel storage 106, this difference should match a further difference between the level of fuel remaining in the fuel storage 106 at the start of the subsequent refueling and the level of fuel remaining in the fuel storage 106 at the start of the specific refueling. Over the series of the successive refuelings, the total amount of fuel supplied minus the total amount of fuel consumed should then equal the remaining fuel level at the start of the last refueling of the series minus the remaining fuel level at the start of the first refueling of the series. The longer the series, the more closely will the total amount of fuel supplied match the total amount of fuel consumed. Based on a pre-determined criterion, this matching may be accepted or rejected. If rejected, a discrepancy is signaled and an alert may be raised. Optionally, the remaining fuel levels may be taken into account in considering whether or not there is a discrepancy.

Above examples illustrate that the first fraud scenario 202 can be detected on the basis of processing, either taken alone or in combination, the data first data, the second data, the third data, the fourth data, the fifth data and, optionally, the context data. The skilled person may readily come up with other examples than the ones above.

### SECOND SCENARIO 204

Consider the second fraud scenario 204, wherein the fuel obtained from the fuel supply 308 is partly supplied at the fuel station 210 to the specific motorized vehicle 102 and partly to another motorized vehicle or to another fuel storage, e.g., a jerry can for holding gasoline. Again, the token 110, associated with the specific motorized vehicle 102, is involved in completing the financial transaction in order to pay for the fuel obtained from the fuel supply 308. This second fraud scenario 204 can be detected as follows.

The server 304 determines the identity of the specific motorized vehicle 102 via the identifier received from the token 110 or via the surveillance cameras at the premises of the fuel station 210. The server 304 also receives the fifth data from the terminal 302 about the amount of fuel supplied by the fuel supply 308. The token 110 is associated with the specific motorized vehicle 102. The server 304 looks up in the database 306 the capacity of the fuel storage 106 of the specific motorized vehicle 102 associated with the token 110. If the amount of fuel supplied by the fuel supply 308 exceeds the capacity of the fuel storage 106, the server 304 determines that there is a discrepancy between the amount of fuel obtained from the fuel supply 308 and the capacity of the fuel storage 106. The discrepancy gives rise to an anomaly and the server 304 issues an alert to, e.g., the attendant of the fuel station 210, or to a party, other than the driver and authorizing a payment for the fuel obtained at the fuel station 210 via a cashless transaction, or to the driver him/herself. Alternatively, or in addition, data representative of the alert is stored in the database 306 as associated with the token 110 and, therefore, with the identity of the specific motorized vehicle 102.

Alternatively, or in addition, the server 304 has received the identity of the specific motorized vehicle 102, the fifth data indicative of the amount of fuel supplied by the fuel supply 308, and the first data representative of the respective amounts of fuel left in the fuel storage 106 at respective moments, or at least when the power source 104 of the specific motorized vehicle was turned off last. The most recent amount of fuel determined as left in the fuel storage 106 is the amount determined at the moment when the driver was turning off the power source 104. If the amount of fuel obtained from the fuel supply 308 exceeds the difference between the capacity of the fuel storage 106 and the most recently determined amount of fuel left in the fuel storage 106, the server 304 determines that there is a discrepancy between the amount of fuel obtained from the fuel supply 308 and the amount of fuel needed to refill the fuel storage 106. The discrepancy gives rise to an anomaly, and the server 304 issues the alert.

Alternatively, or in addition, the server 304 has received the identity of the specific motorized vehicle 102, the fifth data indicative of the amount of fuel supplied by the fuel supply 308, and the first data representative of the respective amounts of fuel left in the fuel storage 106 at respective moments, or at least when the power source 104 of the specific motorized vehicle was turned off last. The most recent amount of fuel determined as left in the fuel storage 106 is the amount determined at the moment when the driver was turning off the power source 104. Assume that the driver has completed the financial transaction to pay, or to have another party to pay, for the fuel obtained from the fuel supply 308 at this refueling event. When the driver then turns on the power source 104, the current fuel level, i.e., the level upon the refueling, is logged in the token as an update to the first data. An alternative to the most recent amount of fuel determined as left in the fuel storage 106 before the current refueling may be considered to cover the event wherein the driver of the motorized vehicle 102 starts the power source 104 after refueling in order to park the motorized vehicle 102 a few yards away from the fuel supply 308 so to make room for a next customer of the fuel station 210. The alternative is then the most recent amount of fuel left in the fuel storage 106 before the significant increase in fuel level as a result of the current refueling. The current significant increase in fuel level may be determined on the basis of the time-stamping, as discussed earlier.

Consider now a next refueling of the specific motorized vehicle 102 at the fuel station 210, or at a similarly equipped fuel station (not shown) different from the fuel station 210 of the preceding refueling. For clarity, it is assumed that the next refueling is taking place at the fuel station 210. The token 110 is again being used to initiate the financial transaction to pay for the fuel obtained from the fuel supply 308 at this next refueling. The token 110 communicates the first data to the terminal 302, and this first data is forwarded to the server 304, which stores the first data in the database 306. The first data currently stored in the database comprises information, received at the preceding refueling, that is indicative of the level of fuel in the fuel storage 106 just before the start of the preceding refueling, i.e., the level at the moment when the driver was turning off the power source 104 at the fuel station 210 at the start of the preceding refueling. The first data currently stored in the database 306 now also comprises information, obtained from the token at the current refueling, about the level of fuel just after the completion of the preceding refueling operation, i.e., the level of fuel in the fuel storage 106 at the moment the driver was turning on the power source 104 after completing the preceding refueling.

The server 304 determines the difference between the amount of fuel in the fuel storage 106 just after the preceding refueling and the amount of fuel in the fuel storage 106 just before the preceding refueling and correlates this difference with the amount of fuel obtained from the fuel supply 308 at the preceding refueling. A discrepancy between the difference and the amount obtained from the fuel supply 308 at the preceding refueling will indicate an anomaly, upon which the server 304 issues an alert.

Alternatively, or in addition, the server 304 receives from the token 110, at the current refueling, the fourth data that is representative of one or more readings of the odometer of the specific motorized vehicle 102. The odometer readings are taken, e.g., each time the power source 104 of the specific motorized vehicle 102 is turned on and each time the power source 104 of the specific motorized vehicle 102 is turned off and/or at predetermined moments and/or at randomly chosen moments in operational use of the specific motorized vehicle 102. Now, consider a next refueling of the specific motorized vehicle 102. The database 306 has already stored the odometer reading of the specific motorized vehicle 102, obtained from the token 110 when the financial transaction of the preceding refueling was completed, i.e., the transaction that involved the refueling of the other motorized vehicle or the filling of the additional fuel storage. The server 304 will determine at the time of the next refueling the difference between the odometer reading received from the token 110 at the next refueling, and the odometer reading received from the token 110 at the time of the refueling of the other motorized vehicle or at the time of filling the additional fuel storage. The server 304 also has received the fifth data from the terminal 302 that is indicative of the amount of fuel obtained from the fuel supply 308 at the current refueling. The server 304 will then estimate the fuel consumption (mileage) of the specific motorized vehicle 102 based on the above odometer readings and an estimate of the amount of fuel consumed in the time span between the above odometer readings. The estimated amount of fuel consumed may be based on a difference between the amount of fuel obtained at the current refueling and the next refueling. If this estimated amount of fuel consumed between the above odometer readings is excessively high relative to the typical fuel consumption of the motorized vehicle 102, the server 304 identifies a discrepancy that gives rise to an anomaly, and issues an alert.

Alternatively, or in addition, the server 304 receives from the token 110 the second data. The second data is representative of the amount of fuel consumed by the power source 104. The fuel consumption is determined by means of monitoring the flow of fuel into the power source 104, e.g., per unit of time or per unit of distance traveled, and integrating the fuel consumption thus determined over the time between turning on the power source 104 and turning off the power source 104, or over the distance traveled as derived from the odometer reading at turning on the power source 104 and the odometer reading at turning off the power source 104. The server 302 accumulates the second data in the database 306, thus creating a history log of the fuel consumption that is extended with every refueling operation of the motorized vehicle 102. At each respective refueling of the motorized vehicle 102, the server 304 also receives from the terminal 302 the respective fifth data that is representative of the respective amount of fuel obtained from the fuel supply 308. Accordingly, the database 306 stores information about the amounts of fuel supplied to the motorized vehicle 102 over the service life of the motorized vehicle 102 so far, as well as information about the amounts of fuel consumed by the power source 104 between each pair of successive refuelings during the service life of the motorized vehicle 102. Consider a series of two or more successive refuelings of the motorized vehicle 102. Consider a difference between the amount of fuel supplied at a specific refueling and the amount of fuel consumed between the specific refueling and the subsequent refueling. In the absence of fraud and in the absence of a leak in the fuel storage 106, this difference should match a further difference between the level of fuel remaining in the fuel storage 106 at the start of the subsequent refueling and the level of fuel remaining in the fuel storage 106 at the start of the specific refueling. Over the series of the successive refuelings, the total amount of fuel supplied minus the total amount of fuel consumed should then equal the remaining fuel level at the start of the last refueling of the series minus the remaining fuel level at the start of the first refueling of the series. The longer the series, the more closely will the total amount of fuel supplied match the total amount of fuel consumed. Based on a pre-determined criterion, this matching may be accepted or rejected. If rejected, a discrepancy is signaled and an alert may be raised. Optionally, the remaining fuel levels may be taken into account in considering whether or not there is a discrepancy.

Above examples illustrate that the second fraud scenario 204 can be detected on the basis of processing, either taken alone or in combination, the data first data, the second data, the third data, the fourth data, the fifth data and, optionally, the context data. The skilled person may readily come up with other examples than the ones above.

### THIRD SCENARIO 206

Consider the third scenario 206, wherein fuel is siphoned off the fuel storage 106 of the specific motorized vehicle 102 after the refueling at the fuel station 210 and when the power source 104 of the specific motorized vehicle 102 has been turned off. This third fraud scenario 206 can be detected as follows.

At a refueling operation of the motorized vehicle 102, the server 304 receives from the token 110 the first data, indicative of respective levels of fuel present in the fuel storage 106 at respective moment. The server 304 stores the first data in the database 306. At least the level of fuel is logged in the token 110 at the times when the power source 104 is being turned off and at the times when the power source 104 is being turned on. No significant amount of fuel should disappear from the fuel storage 106 when the power source 104 has been turned off. That is, the level of fuel in the fuel storage 106 when the power source 104 is being turned on should not be lower than the level of fuel in the fuel storage 106 when the power source 104 was being turned off last time. If, when the power source 104 is being turned on, the level of fuel in the fuel storage 106 is lower than the level of fuel in the fuel storage 106 when the power source 104 was being turned off prior to the turning on, there is a discrepancy. The server 304 determines that there is an anomaly and issues an alert. The moral integrity of the driver of the specific motorized vehicle 102 may not come into play if it turns out that above discrepancy was caused by a leak in the fuel storage 106. Accordingly, the alert can be used to trigger a check of the fuel storage 106 and, possibly, a repair job. A bar of soap may be a provisional solution to a leaking gasoline tank while on the road. If the level of fuel in the fuel storage 106 is higher when the power source 104 is being turned on than the level of fuel in the fuel storage 106 when the power source 104 was being turned off prior to the turning on, it may be concluded that the specific motorized vehicle 102 was refueled in the meantime.

Alternatively, or in addition, the server 304 receives from the token 110 the first data and the fourth data. The server 304 stores the first data and the fourth data in the database 306. The first data is representative of respective levels of fuel present in the fuel storage 106 at respective moments. The fourth data is indicative of respective odometer readings logged in the token 110 at respective times. By means of correlating the levels of fuel present in the fuel storage 106 with the odometer readings at the times of assessing the levels of fuel present in the fuel storage 106, the fuel consumption per distance traveled is determined with a resolution that is determined by the frequency of the odometer readings and the fuel level measurements. Accordingly, the server 304 may compare the thus determined fuel consumption over the distances traveled with a quantity representing a benchmark figure of the fuel consumption. The benchmark figure may be a given parameter value that is typical to the type of the specific motorized vehicle 102, or the benchmark figure may have been determined on the basis of a history of the fuel consumption of the specific motorized vehicle 102. The latter option takes into account the individual conditions under which the specific motorized vehicle 102 has been used.

If there is a discrepancy between, on the one hand, the fuel consumption as determined from the first data and the fourth data and, on the other hand, the benchmark figure, the server 304 may conclude that there is an anomaly and may raise an alert. The context data and/or the third data (geographic locations of the specific motorized vehicle 102) may be taken into account to put the fuel consumption, as determined, into the context of, for example, the weather (e.g., airco on), the time of the day (e.g., traffic congestion during rush hour), the geographic environment through which the specific motorized vehicle 102 is traveling (e.g., city versus open road, hills versus flat country).

Alternatively, or in addition, the server 304 receives from the token 110 the first data and the second data and stores the first data and the second data in the database 308. The first data is indicative of the respective levels of fuel present in the fuel storage 106. The second data is indicative of the respective amounts of fuel consumed by the power source 104 during respective time intervals in operational use of the motorized vehicle 102. A difference between a first level of fuel and a second, lower, level of fuel is representative of an amount of fuel taken from the fuel storage 106. The first level of fuel and the second level of fuel are determined under control of a clock onboard the specific motorized vehicle 102 or under control of the odometer of the specific motorized vehicle 102. The amount of fuel taken from the fuel storage 106 is supposed to have been consumed by the power source 104 in operational use of the specific motorized vehicle 102. The second data provides the information about the amount of fuel consumed by the power source 104. The fuel consumption is determined by means of monitoring the flow of fuel into the power source 104, e.g., per unit of time or per unit of distance traveled., and integrating the fuel consumption over the time between turning on the power source 104 and turning off the power source 104 or over the distance traveled as derived from the odometer reading at turning on the power source 104 and the odometer reading at turning off the power source 104. For example, the actual amount of fuel consumed is determined between turning on the power source 104 and the first turning off of the power source 104 following the turning on. The actual amount of fuel consumed thus determined is correlated with the difference between the level of fuel in the fuel storage 106 at the turning on of the power source 104 and the level of fuel in the fuel storage 106 at the subsequent tuning off of the power source 104. As an alternative, or as an addition, multiple time intervals could be defined, over which to determine the mileage, in dependence on the driving style. For example, any change in driving style could be used as a trigger to start a new time interval. As another example, a distinction is made between time intervals, wherein the specific motorized vehicle 102 has a non-zero speed, and other time intervals wherein the speed is zero and the power source 104 has not been turned off. In the former time intervals mileage is estimated based on speed patterns and/or acceleration patterns. The latter time intervals are indicative of, e.g., waiting times in front of a traffic light with the engine idling, waiting in a traffic jam with the engine idling, sitting in the specific motorized vehicle 102 with the airco turned on or making a phone call with the engine idling, etc. In the former time intervals mileage is estimated based on speed patterns or acceleration patterns. In the latter time intervals, the consumption is determined on the basis of, e.g., the fuel levels in the fuel storage 106 as there is no distance traveled in order to compute the mileage. Accordingly, correlating the first data and the second data may reveal a discrepancy between the amount of fuel actually consumed by the power source 104 and the amount of fuel taken from the fuel storage 106. If there is such a discrepancy, the server 304 may conclude that there is an anomaly and may therefore issue an alert.

Alternatively, or in addition, the server 304 receives the fifth data, representative of the amount of fuel obtained from the fuel supply 308, and the fourth data, representative of the readings of the odometer of the specific motorized vehicle 102. The fifth data and the fourth data are stored in the database 306. Accordingly, the database 306 accumulates the fifth data and the fourth data over a number of successive refuelings that involved the token 110. It is assumed that the total of the amounts of fuel obtained from the fuel supply 308 has been consumed by the power source 104 between the odometer reading at the least recent refueling and the odometer reading at the most recent refueling. The ratio between, on the one hand, the total amount of fuel assumed to have been consumed by the power source 104 and, on the other hand, the difference between the two odometer readings gives the average fuel consumption of the specific motorized vehicle 102 per unit distance traveled. The average fuel consumption thus determined can be compared to a typical fuel consumption of the type of the specific motorized vehicle 102 determined independently, or to a history of the average fuel consumption determined for the specific motorized vehicle 102 and stored in the database 306. If the context data is available the fuel consumption thus determined may be adjusted for the driving style of the driver of the specific motorized vehicle 102, the topography of the geographical area traversed between the two odometer readings, congested roads (start-stop traffic), the airco being turned on, the time of the year, etc. If the server 304 determined that there is a discrepancy as a result of this comparison, the server 304 may determine that there is an anomaly and may therefore raise an alert.

Alternatively, or in addition, the server 304 receives from the token 110 the second data. The second data is representative of the amount of fuel consumed by the power source 104. The fuel consumption is determined by means of monitoring the flow of fuel into the power source 104, e.g., per unit of time or per unit of distance traveled, and integrating the fuel consumption thus determined over the time between turning on the power source 104 and turning off the power source 104, or over the distance traveled as derived from the odometer reading at turning on the power source 104 and the odometer reading at turning off the power source 104. The server 302 accumulates the second data in the database 306, thus creating a history log of the fuel consumption that is extended with every refueling operation of the motorized vehicle 102. At each respective refueling of the motorized vehicle 102, the server 304 also receives from the terminal 302 the respective fifth data that is representative of the respective amount of fuel obtained from the fuel supply 308. Accordingly, the database 306 stores information about the amounts of fuel supplied to the motorized vehicle 102 over the service life of the motorized vehicle 102 so far, as well as information about the amounts of fuel consumed by the power source 104 between each pair of successive refuelings during the service life of the motorized vehicle 102. Consider a series of two or more successive refuelings of the motorized vehicle 102. Consider a difference between the amount of fuel supplied at a specific refueling and the amount of fuel consumed between the specific refueling and the subsequent refueling. In the absence of fraud and in the absence of a leak in the fuel storage 106, this difference should match a further difference between the level of fuel remaining in the fuel storage 106 at the start of the subsequent refueling and the level of fuel remaining in the fuel storage 106 at the start of the specific refueling. Over the series of the successive refuelings, the total amount of fuel supplied minus the total amount of fuel consumed should then equal the remaining fuel level at the start of the last refueling of the series minus the remaining fuel level at the start of the first refueling of the series. The longer the series, the more closely will the total amount of fuel supplied match the total amount of fuel consumed. Based on a pre-determined criterion, this matching is accepted or rejected. If rejected, a discrepancy is signaled and an alert may be raised. Optionally, the remaining fuel levels may be taken into account in considering whether or not there is a discrepancy.

Above examples illustrate that the third fraud scenario 206 can be detected on the basis of processing, either taken alone or in combination, the data first data, the second data, the third data, the fourth data, the fifth data and, optionally, the context data. The skilled person may readily come up with other examples than the ones above.

### FOURTH SCENARIO 208

In the fourth fraud scenario 208, the fuel flow from the fuel storage 106 to the power source 104 in operational use of the specific motorized vehicle 102 is tapped, and part of the fuel is diverted to an ancillary fuel storage onboard the specific motorized vehicle 102 and does not reach the power source 104 of the specific motorized vehicle 102. For example, the fuel pipe in a car with a gasoline engine is tapped between the tank and the fuel injection system so as to divert part of the gasoline to a jerry can stowed away in the trunk of the car in operational use of the car.

The fourth scenario 208 may be detected by correlating the first data (the levels of fuel in the fuel storage 106) and the fourth data (the odometer readings). Assume that an amount of fuel is diverted to additional fuel storage onboard the specific motorized vehicle 102 by tapping the flow from the fuel storage 106 to the power source 104 in operational use of the motorized vehicle 102. The fuel consumption is determined from the decrease in the level of fuel in the fuel storage 106 per distance traveled as determined from the odometer readings. The fuel consumption thus determined is compared to the expected fuel consumption. The expected fuel consumption is based on, e.g., a history of the fuel consumption of the specific motorized vehicle 102 as logged in the database 306, or on a benchmark figure typical for the type of the specific motorized vehicle 102. There is a discrepancy if this fuel consumption is higher than the expected fuel consumption. If there is a discrepancy, the server 304 concludes that there is an anomaly and issues an alert.

Alternatively, or in addition, the fourth scenario 208 may be detected by correlating the first data (levels of fuel in the fuel storage 106) and the second data (amount of fuel actually consumed by the power source 104). It is assumed that the following conservation law applies: the amount of fuel disappeared from the fuel storage 106 equals the amount of fuel that has gone into the power source 104. If the first data indicate that the amount of fuel taken from the fuel storage 106 between two odometer readings or between two moments is larger than the amount of fuel consumed by the power source 104 between the same two odometer readings or between the same moments, there is a discrepancy and the server 304 may issue an alert.

Alternatively, or in addition, the server 304 receives from the token 110, at the current refueling, the fourth data that is representative of one or more readings of the odometer of the specific motorized vehicle 102. The odometer readings are taken, e.g., each time the power source 104 of the specific motorized vehicle 102 is turned on and each time the power source 104 of the specific motorized vehicle 102 is turned off and/or at predetermined moments and/or at randomly chosen moments in operational use of the specific motorized vehicle 102. Now, consider a next refueling of the specific motorized vehicle 102. The database 306 has already stored the odometer reading of the specific motorized vehicle 102, obtained from the token 110 when the financial transaction of the preceding refueling was completed. The server 304 will determine at the time of the next refueling the difference between the odometer reading received from the token 110 at the next refueling, and the odometer reading received from the token 110 at the preceding refueling. The server 304 also has received the fifth data from the terminal 302 that is indicative of the amount of fuel obtained from the fuel supply 308 at the current refueling. The server 304 will then estimate the fuel consumption (mileage) of the specific motorized vehicle 102 based on the above odometer readings and an estimate of the amount of fuel consumed in the time span between the above odometer readings. The estimated amount of fuel consumed may be based on a difference between the amount of fuel obtained at the current refueling and the next refueling. If this estimated amount of fuel consumed between the above odometer readings is excessively high relative to the typical fuel consumption of the motorized vehicle 102, the server 304 identifies a discrepancy that gives rise to an anomaly, and issues an alert.

Alternatively, or in addition, the server 304 receives from the token 110 the second data. The second data is representative of the amount of fuel consumed by the power source 104. The fuel consumption is determined by means of monitoring the flow of fuel into the power source 104, e.g., per unit of time or per unit of distance traveled, and integrating the fuel consumption thus determined over the time between turning on the power source 104 and turning off the power source 104, or over the distance traveled as derived from the odometer reading at turning on the power source 104 and the odometer reading at turning off the power source 104. The server 302 accumulates the second data in the database 306, thus creating a history log of the fuel consumption that is extended with every refueling operation of the motorized vehicle 102. At each respective refueling of the motorized vehicle 102, the server 304 also receives from the terminal 302 the respective fifth data that is representative of the respective amount of fuel obtained from the fuel supply 308. Accordingly, the database 306 stores information about the amounts of fuel supplied to the motorized vehicle 102 over the service life of the motorized vehicle 102 so far, as well as information about the amounts of fuel consumed by the power source 104 between each pair of successive refuelings during the service life of the motorized vehicle 102. Consider a series of two or more successive refuelings of the motorized vehicle 102. Consider a difference between the amount of fuel supplied at a specific refueling and the amount of fuel consumed between the specific refueling and the subsequent refueling. In the absence of fraud and in the absence of a leak in the fuel storage 106, this difference should match a further difference between the level of fuel remaining in the fuel storage 106 at the start of the subsequent refueling and the level of fuel remaining in the fuel storage 106 at the start of the specific refueling. Over the series of the successive refuelings, the total amount of fuel supplied minus the total amount of fuel consumed should then equal the remaining fuel level at the start of the last refueling of the series minus the remaining fuel level at the start of the first refueling of the series. The longer the series, the more closely will the total amount of fuel supplied match the total amount of fuel consumed. Based on a pre-determined criterion, this matching is accepted or rejected. If rejected, a discrepancy is signaled and an alert may be raised. Optionally, the remaining fuel levels may be taken into account in considering whether or not there is a discrepancy.

Above examples illustrate that the fourth fraud scenario 208 can be detected on the basis of processing, either taken alone or in combination, the data first data, the second data, the third data, the fourth data, the fifth data and, optionally, the context data. The skilled person may readily come up with other examples than the ones above.

### PROCESS DIAGRAM

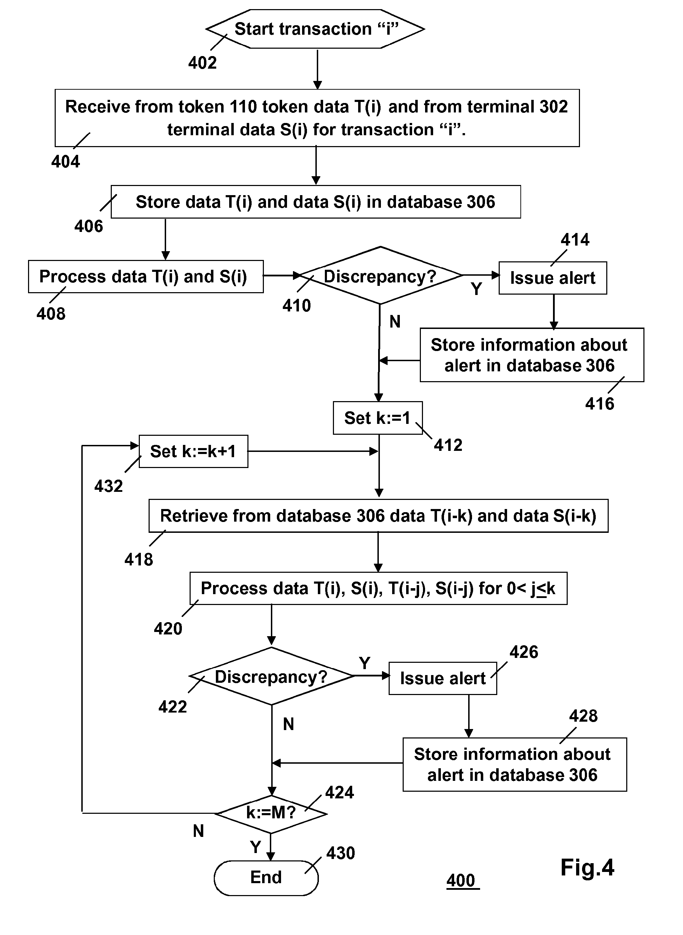

Fig.4 is a diagram of a process 400 illustrating an embodiment of a method according to the invention for detecting fraudulent use of fuel intended for the power source 104 of the specific motorized vehicle 102.

In a first step 402 of the process 400, a transaction is started at the terminal 302 for the payment of the fuel obtained from the fuel supply 308 at a current refueling operation and intended for the specific motorized vehicle 102. As explained above, data stored in the database 306 during transactions for the payment of the fuel obtained at previous refueling operations may be taken into account in order to detect a possible fraudulent use of the token 110. The data regarding the transaction for the current refueling operation is labeled with an index "i". The data regarding the transaction preceding the current transaction has a label "i-1 ", the data regarding the transaction preceding the transaction "i-1" has a label "i-2", etc. As there is no reason for confusion, the transactions and the refuelings will be labeled similarly to the manner wherein the data is labeled. The data received via the terminal 302 from the token 110 in a transaction "i" at the refueling "i" is indicated as token data T(i), and the data received via the terminal 302 from the fuel supply 308 in the transaction "i" at the refueling "i" is indicated as terminal data S(i).

In a second step 404, the token data T(i) is received from the token 110 and the terminal data S(i) is received from the fuel supply 308.

In a third step 406, the token data T(i) and the terminal data S(i) are stored in the database 306.

In a fourth step 408, the token data T(i) and terminal data S(i) are processed.

In a fifth step 410 it is determined if the processing in the fourth step 408 has identified a discrepancy between the token data T(i) and terminal data S(i). For example, the token data T(i) specifies the most recently logged level of fuel in the fuel storage 106 of the specific motorized vehicle 102. This most recently logged level is assumed to be the level of the fuel in the fuel storage when the power source 104 was being turned off at the fuel station 210 in order to start the current refueling operation. As the total capacity of the fuel storage 106 is predetermined, the processing at the fourth step 408 checks whether or not the amount of fuel obtained from the fuel supply 308 at the current refueling exceeds the difference between the total capacity of the fuel storage 106 and the amount of fuel remaining in the fuel storage 106 at the time of turning off the power source 104 in order to start the current refueling. If the processing at the fourth step 408 does not give rise to detecting a discrepancy in the fifth step 410, the process 400 proceeds to a sixth step 412. If the processing at the fourth step 408 does give rise to detecting a discrepancy in the fifth step 410, it is concluded that there is an anomaly and the process 400 proceeds to a seventh step 414 to raise an alert. In an (optional) eighth step 416, information about the alert, raised in the seventh step 414, is stored in the database 306.The process 400 then proceeds with the sixth step 412.

In the sixth step 412, a running variable "k" is initialized to k = 1.

In a ninth step 418, the token data T(i-k) and the terminal data S(i-k) are retrieved from the database 306, with k = 1. The token data T(i-1) and the terminal data S(i-1) are the data, received from the token 110 at the preceding refueling "i-1 ", and the data received from the terminal 302 at the preceding refueling "i-1", respectively.

In a tenth step 420, the token data T(i), the token data T(i-1), the terminal data S(i) and the terminal data S(i-1) are processed. For example, the token data T(i-1) provides the level of fuel in the fuel storage 106 just prior to the refueling "i-1", the token data T(i) provides the level of fuel in the fuel storage 106 just after the refueling "i-1", and the terminal data S(i-1) provides the amount of fuel obtained from the fuel supply 308 at the refueling "i-1". The processing in the tenth step 420 determines, e.g., whether or not the amount of fuel according to the terminal data S(i-1) matches the difference between the level of fuel in the fuel storage 106 just after the refueling "i-1" and the level of fuel in the fuel storage just before the refueling "i-1".

In an eleventh step 422, it is determined whether or not the result of the processing in the tenth step 420 indicates a discrepancy. If the eleventh step 422 does not detect a discrepancy, the process 400 proceeds with a twelfth step 424.

If the eleventh step 422 determines that there is a discrepancy, the process 400 proceeds with a thirteenth step 426 to raise an alert and, optionally, with a fourteenth step 428 to store information about the alert of the thirteenth step 426 in the database 306. The process 400 then proceeds with the twelfth step 424.

In the twelfth step 424, it is determined in the running variable "k" has reached a threshold value M. The running variable "k" indicates the number of preceding refuelings "i-1", "i-2", ... "i-k", whose token data T(i-1), T(i-2), ..., T(i-k), and whose terminal data S(i-1), S(i-2), ..., S(i-k) are to be taken into account in the processing in the tenth step 420. For example, the average fuel consumption of the motorized vehicle 102 is determined as follows. The difference between two odometer readings at two successive refuelings gives the distance traveled. The difference between the levels of fuel in the fuel storage 106 logged at the the times of the two successive refuelings gives the total amount of fuel consumed. Accordingly, the average fuel consumption between two successive refuelings can be determined as the ratio of the distance traveled and the total amount of fuel consumed. An anomaly in the magnitude of the average fuel consumption can be determined by means of analyzing a history of the magnitude of the average fuel consumption as logged in the database 306 or as calculated with the data stored in the database 306. The running variable "k" is indicative of the length of the history taken into account, and the threshold value M indicates the maximum length of the history.

If it is determined in the twelfth step 424 that the running variable "k" has reached the threshold value M, the process 400 terminates at the fifteenth step 430. If it is determined in the twelfth step that the running variable "k" has not reached the threshold value M, the process 400 proceeds with a sixteenth step 432, wherein the running variable "k" is incremented by unity. After the sixteenth step 432, the process 400 returns to the ninth step 418 to retrieve from the database 306 the token data T(i-k) and the terminal data S(i-k).

In above discussion of the invention, the token has been specified as a means to transfer the system data from the onboard data processing system 108 of the motorized vehicle 102 as token data to the terminal 302 of the fuel station 210. The driver of the motorized vehicle 102 may use a validation means, e.g., a fuel card or an identity card of the driver, to validate the financial transaction at the fuel station 210, including the transfer of the token data. The validation means may specify a manner of payment, an identity of the driver, etc., and may require the driver to enter a PIN (Personal Identification Number) at the terminal 302 to validate the transfer. Alternatively, the token 110 is configured for transfer of the token data to the terminal 302 of the fuel station 210, as well as for enabling the driver to validate the financial transaction.

## Claims

1. A method (400) of detecting fraudulent use of fuel, intended for a power source (104) of a specific motorized vehicle (102), wherein:
the specific motorized vehicle comprises:
onboard fuel storage (106) for storing the fuel for being consumed by the power source in operational use of the motorized vehicle;
an onboard data processing system (108) for generating system data, the system data comprises at least one of:
first data representative of a respective first amount of fuel present in the onboard fuel storage at a respective time;
second data representative of a respective second amount of fuel consumed by the power source during a respective time interval or over a respective distance traveled in operational use of the motorized vehicle;
third data representative of a geographic location assumed by the motorized vehicle in operational use; and
fourth data representative of a reading of an odometer of the specific motorized vehicle in operational use;
a token (110), configured for:
storing an identifier associated with the specific motorized vehicle;
receiving the system data from the onboard data processing system;
supplying token data to a terminal (302), wherein the token data is representative of at least one of the identifier and the system data;
the method comprises at a current refueling of the specific motorized vehicle:
receiving (404) the token data from the token via the terminal;
receiving (404) terminal data from the terminal, the terminal data comprises at least one of:
fifth data representative of a fifth amount of fuel obtained from the fuel station; and
sixth data representative of an identity of the specific motorized vehicle;
processing (408; 420) of the token data and the terminal data for determining whether or not there is a discrepancy; and
issuing (414; 426) an alert if the discrepancy is present.

2. The method of claim 1, comprising:
under control of the identifier, storing (406) in a database (306) current refueling data representative of the token data and the terminal data received at the current refueling;
under control of the identifier, retrieving (418) from the database previous refueling data representative of the token data and the terminal data received at a previous refueling, and
processing (420) the token data and the terminal data of the current refueling and the previous refueling data to determine whether or not the discrepancy is present.

3. The method of claim 1 or 2, comprising storing in the token at the current refueling at least one of the terminal data and discrepancy data representative of the discrepancy determined.

4. The method of claim 1, 2 or 3, wherein at least one of the token data and the system data is encrypted or includes a hash value.

5. A specific motorized vehicle (102), comprising:
a power source (104) for propelling the motorized vehicle;
onboard fuel storage (106) for storing the fuel for being consumed by the power source in operational use of the motorized vehicle;
an onboard data processing system (108) for generating system data, the system data comprises at least one of:
first data representative of a respective first amount of fuel present in the onboard fuel storage at a respective time;
second data representative of a respective second amount of fuel consumed by the power source during a respective time interval or over a respective distance traveled in operational use of the motorized vehicle;
third data representative of a geographic location assumed by the motorized vehicle in operational use; and
fourth data representative of a reading of an odometer of the specific motorized vehicle in operational use;
a token (110);
wherein:
the token (110) stores an identifier associated with the specific motorized vehicle;
the onboard data processing system is configured for communicating the system data to the token if the identifier corresponds to an identity of the specific motorized vehicle;
the token is configured for supplying token data to a terminal (302); and
the token data is representative of at least one of the identifier and the system data.

6. First control software (112) on a computer-readable medium for use at an onboard data processing system (108) of a specific motorized vehicle (102), wherein:
the specific motorized vehicle (102), comprises:
a power source (104) for propelling the motorized vehicle;
onboard fuel storage (106) for storing the fuel for being consumed by the power source in operational use of the motorized vehicle;
the onboard data processing system is configured for generating system data that comprises at least one of:
first data representative of a respective first amount of fuel present in the onboard fuel storage at a respective time;
second data representative of a respective second amount of fuel consumed by the power source during a respective time interval or over a respective distance traveled in operational use of the motorized vehicle;
third data representative of a geographic location assumed by the motorized vehicle in operational use; and
fourth data representative of a reading of an odometer of the specific motorized vehicle in operational use;
the first control software comprises first instructions to configure the onboard data processing system for supplying the system data to a token (110) if the token has an identifier that corresponds with an identity of the specific motorized vehicle.

7. Second control software (310) on a computer-readable medium for configuring a server (304) connected to a terminal (302) at a fuel station (210) to implement a method (400) of detecting fraudulent use of fuel, intended for a power source (104) of a specific motorized vehicle (102), wherein:
the specific motorized vehicle comprises:
onboard fuel storage (106) for storing the fuel for being consumed by the power source in operational use of the motorized vehicle;
an onboard data processing system (108) for generating system data, the system data comprises at least one of:
first data representative of a respective first amount of fuel present in the onboard fuel storage at a respective time;
second data representative of a respective second amount of fuel consumed by the power source during a respective time interval or over a respective distance traveled in operational use of the motorized vehicle;
third data representative of a geographic location assumed by the motorized vehicle in operational use; and
fourth data representative of a reading of an odometer of the specific motorized vehicle in operational use;
a token (110), configured for:
storing an identifier associated with the specific motorized vehicle;
receiving the system data from the onboard data processing system;
supplying token data to the terminal, wherein the token data is representative of at least one of the identifier and the system data;
the second control software comprises:
second instructions for receiving (404) the token data from the token via the terminal at a current refueling of the specific motorized vehicle;
third instructions for receiving (404) terminal data from the terminal at a current refueling of the specific motorized vehicle, the terminal data comprises at least one of:
fifth data representative of a fifth amount of fuel obtained from the fuel station; and
sixth data representative of an identity of the specific motorized vehicle;
fourth instructions for processing (408; 420) of the token data and the terminal data for determining whether or not there is a discrepancy; and
fifth instructions for issuing (414; 426) an alert if the discrepancy is present.

8. The second control software of claim 7, comprising:
sixth instructions for storing (406), under control of the identifier, in a database (306) current refueling data representative of the token data and the terminal data received at the current refueling;
seventh instructions for retrieving (418), under control of the identifier, from the database previous refueling data representative of the token data and the terminal data received at a previous refueling, and
eighth instructions for processing (420) the token data and the terminal data of the current refueling and the previous refueling data to determine whether or not the discrepancy is present.

9. The second control software of claim 7 or 8, comprising ninth instructions for storing in the token at the current refueling at least one of the terminal data and discrepancy data representative of the discrepancy determined.

10. The second control software of claim 7, 8 or 9, wherein at least one of the token data and the system data is encrypted or includes a hash value.

11. A system (300) configured for detecting fraudulent use of fuel, intended for a power source (104) of a specific motorized vehicle (102), wherein:
the system comprises:
a fuel supply (308) for supplying the fuel;
a terminal (302) connected to the fuel supply;
a server (304) connected to the terminal; and
the specific motorized vehicle comprises:
onboard fuel storage (106) for storing the fuel for being consumed by the power source in operational use of the motorized vehicle;
an onboard data processing system (108) for generating system data, the system data comprises at least one of:
first data representative of a respective first amount of fuel present in the onboard fuel storage at a respective time;
second data representative of a respective second amount of fuel consumed by the power source during a respective time interval or over a respective distance traveled in operational use of the motorized vehicle;
third data representative of a geographic location assumed by the motorized vehicle in operational use; and
fourth data representative of a reading of an odometer of the specific motorized vehicle in operational use;
a token (110), configured for:
storing an identifier associated with the specific motorized vehicle;
receiving the system data from the onboard data processing system;
supplying token data to the terminal, wherein the token data is representative of at least one of the identifier and the system data;
the terminal is operative, at a current refueling of the specific motorized vehicle, to receive (404) the token data from the token and to generate terminal data that comprises at least one of:
fifth data representative of a fifth amount of fuel obtained from the fuel station; and
sixth data representative of an identity of the specific motorized vehicle;
the server is configured for:
receiving (404) from the terminal the token data and the terminal data;
processing (408; 420) of the token data and the terminal data for determining whether or not there is a discrepancy; and
issuing (414; 426) an alert if the discrepancy is present.

12. The system of claim 11, comprising a database (306) connected to the server, wherein:
the server is operative to store (406), under control of the identifier, in the database current refueling data representative of the token data and the terminal data received at the current refueling;
the server is operative to retrieve (418), under control of the identifier, from the database previous refueling data representative of the token data and the terminal data received at a previous refueling, and
the server is operative to process (420) the token data and the terminal data of the current refueling and the previous refueling data to determine whether or not the discrepancy is present.

13. The system of claim 11 or 12, configured for storing via the terminal in the token at the current refueling at least one of the terminal data and discrepancy data representative of the discrepancy determined.
